Europäisches Patentamt

European Patent Office

Office européen des brevets

(19)

(11) Publication number: **0 122 665**
**B1**

# EUROPEAN PATENT SPECIFICATION

(12)

(45) Date of publication of patent specification: **14.09.88**

(51) Int. Cl.⁴: **F 26 B 17/00**

(21) Application number: **84200483.0**

(22) Date of filing: **03.04.84**

(54) Dehydrating apparatus.

(30) Priority: **04.04.83 US 481628**

(43) Date of publication of application:
**24.10.84 Bulletin 84/43**

(45) Publication of the grant of the patent:
**14.09.88 Bulletin 88/37**

(84) Designated Contracting States:
**BE DE FR GB NL**

(56) References cited:
**DE-B-1 604 900**
**US-A-3 618 655**
**US-A-4 171 243**

(73) Proprietor: **SONODYNE INDUSTRIES, INC.**
**11135 S.W. Capitol Highway**
**Portland Oregon 97219 (US)**

(72) Inventor: **Gray, Robert Roe**
**16110 S. Hilltop Road**
**Oregon City Oregon 97045 (US)**
Inventor: **Lindahl, Thomas George**
**7475 S.W. Alden**
**Portland Oregon 97223 (US)**
Inventor: **Bright, Paul Timothy**
**P.O. Box 455**
**Raywood Washington 98577 (US)**
Inventor: **Margulis, Valery**
**10015 S.W. Kennedy Street**
**Beaverton Oregon 97005 (US)**

(74) Representative: **van der Beek, George Frans**
**et al**
**Nederlandsch Octrooibureau Johan de Wittlaan**
**15 P.O. Box 29720**
**NL-2502 LS 's-Gravenhage (NL)**

Courier Press, Leamington Spa, England.

## Description

This invention relates to dehydrating apparatus, comprising a pulse jet engine having a combustion chamber section at one end of a dehydration section, which at the opposite end thereof terminates in a discharge opening, a wet product delivery passageway having a discharge end, communicating with the dehydration section for delivering to said dehydration section wet product to be dehydrated and means communicating with the discharge opening of the dehydration section for collecting the dehydrated product.

Pulse jet engines have been proposed heretofore for use in drying finely divided solids. Illustrative of such proposals in US—A—3,618,655 which discloses spray drying apparatus in which a paste or slurry of the material to be dried is injected through a delivery pipe into the dehydration section of the exhaust pipe of a pulse jet engine which delivery pipe extends down the axis of the exhaust pipe and terminates near the end of said exhaust pipe, so that said pulse jet engine functions to partially dry the material and dispenses it to a vertical drying chamber in which gas vortices circulation of the material and consequent further drying.

DE—B—1604900 discloses an apparatus for drying substances dissolved in a solvent, comprising a gas inlet conduit in communication with a nozzle having converting and diverging portions which opens into a mixing chamber which merges into a diffuser-zone comprising a diffuser-throat and a diffuser which is connected with a drying tube. The wet product is injected into the mixing chamber in a direction at an angle to the axis of the nozzle and the mixing chamber, which angle is preferably 90°.

The principle objective of the invention is to provide an apparatus of the type mentioned hereinabove in which the material to be dried is substantially completely and instantaneously dehydrated before it exits the dehydration section.

This objective is achieved; in that said dehydrating section, in the direction of the discharge opening is of progressively expanding truncated conical configuration and said delivery passageway is arranged to inject wet product into the dehydration section in a direction substantially normal to the flow of combustion gases through said dehydration section, coupling means being provided which interengage the dehydration section and the wet product delivery passageway for moving the discharge end of said delivery passageway along the length of the dehydration section, whereby to adjust the point of communication of said discharge end relative to the length of the dehydration section, to achieve substantially complete dehydration of wet product within the dehydration section.

The point of introduction of the material to be dried is adjustable to accommodate the treatment of a wide variety of materials of diverse moisture content.

Advantageously the apparatus according to the invention includes an engine room for the pulse jet engine, air delivery means communicating with the engine room, a gas outlet fan communicating with a collector room for exhausting combustion gases from the latter, the air delivery means and the gas outlet fan being operative to produce a pressure drop between the engine room and the collector room by which pressure drop the performance of the pulse jet engine is enhanced.

In an apparatus which includes separator means communicating with the collector room for separating finely dehydrated products from the combustion gases, according to the invention the gas outlet fan communicates with the separator means for exhausting combustion gases from the latter.

Advantageously means for supplying additional combustible fuel to the engine intermediate the combustion chamber section and dehydration section is provided which means is preferably connected to the inlet end of a tailpipe section at the inlet end of the dehydration section, which additional combustible fuel inlet is provided to increase the outlet capacity and to accommodate all types of combustible fuels without increasing engine size.

In an apparatus in which the pulse jet engine comprises an exhaust outlet, a tailpipe section and a coupler section, according to the invention said exhaust outlet is a section separate from the tailpipe section and the tailpipe section detachably interconnects the coupler section and the exhaust outlet section so that the pulse jet engine is configured in a plurality of replaceable sections for rapid substitution of parts with minimum production down-time.

The foregoing and other objects and advantages of this invention will appear from the following detailed description, taken in connection with the accompanying drawings of a preferred embodiment.

Fig. 1 is a fragmentary side elevation of dehydrating apparatus embodying the features of this invention.

Fig. 2 is a vertical longitudinal section through the engine room of the apparatus showing structural details of the pulse jet engine.

Fig. 3 is a sectional view taken on the line 3—3 in Fig. 2.

Fig. 4 is a sectional view taken on the ine 4—4 in Fig. 3.

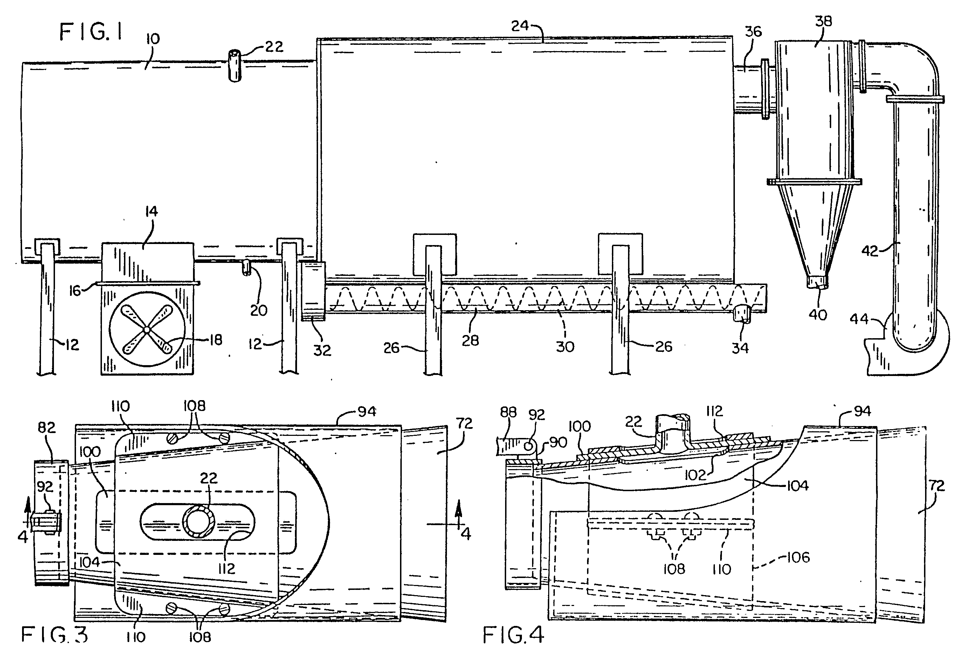

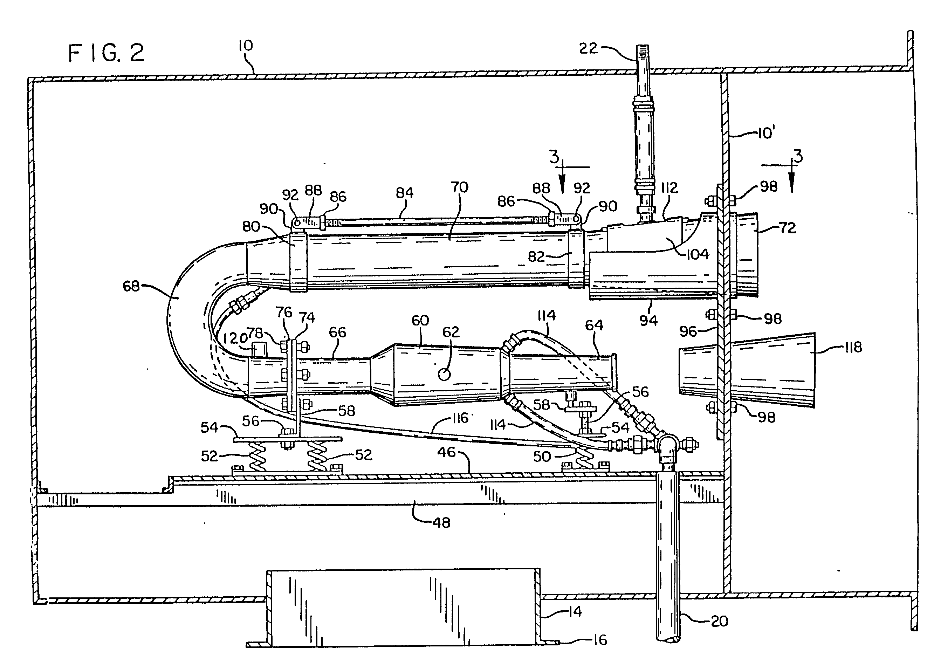

Referring first to Fig. 1 of the drawings, the dehydrating apparatus illustrated includes an engine room 10 in wich is contained the pulse jet engine to be described hereinafter. The engine room is supported in elevated position above a floor by means of a plurality of legs 12 (Fig. 2). An air inlet conduit 14 extends through the bottom wall of the engine room and is provided on its outer side with a peripheral flange 16 by which to mount an air inlet fan 18. The fan is arranged to inject atmospheric air into the engine room, whereby to supply oxygen for combustion in the pulse jet engine.

A combustible fuel inlet 20 extends through the bottom wall of the engine room for supplying fuel to the pulse jet engine. A wet product inlet conduit 22 extends through the top wall of the engine room for delivering wet products to be dehydrated.

Those skilled in the art of pulse jet engines recognize that they operate with considerable noise and vibration. Accordingly, although not illustrated in the drawing, the engine room preferably is constructed of double walls with the space therebetween filled with sand or other sound deadening and vibration damping material.

The front end of the engine room is joined to the rear end of a collector room 24 which also is supported above ground by means of legs 26. The collector room is preferably circular in cross section to facilitate the gravitation of the dried solid material to a central longitudinal opening which extends the full length of the collector room. This opening communicates with an elongated screw conveyor housing 28 containing an elongated conveyor screw 30. The rearward end of the screw is connected to a drive motor and gear reducer unit 32 for rotating the screw at a selected speed. The forward end of the screw conveyor housing communicates with dried product outlet pipe 34. This pipe may communicate with bagging equipment by which the dried product is containerized. Alternatively, the outlet pipe may discharge the dried product onto a conveyor for transport to further processing equipment.

The front wall of the collector room is provided with an opening adjacent the upper end thereof for communication through an exhaust gas outlet pipe 36 with the inlet of a cyclone or other form of separator 38. The separator functions by centrifugal or other action to separate the solid fines material gravitating downward to the outlet 40 of the separator where they are collected. The gases are drawn from the upper end of the separator through a gas outlet pipe 42 which communicates with the inlet of a gas outlet fan 44. The clean gases thus are exhausted to the atmosphere at the outlet of the fan.

Referring now primarily to Fig. 2 of the drawing, the engine room is shown to contain a pulse jet engine. In the preferred embodiment illustrated, the engine is mounted on a platform 46 supported on a framework 48 which extends the length of the engine room a spaced distance above the bottom wall thereof. The rearward end of the platform terminates short of the rear wall of the engine room to provide an opening for the passage of air upwardly from the air inlet fan.

Also as illustrated, the pulse jet engine is mounted resiliently above the support platform, to cushion the platform and engine room walls from vibrations incident to the operation of the engine. The resilient mountings are shown to comprise a front coil spring 50 and a rear pair of coil springs 52 extending upward from the platform and mounting plates 54 at their upper ends. Bolts 56 secured removably to the plates serve to secure thereto brackets 58 which connect to front and rear portions of the pulse jet engine.

The pulse jet engine includes a combustion chamber section 60 provided with a spark plug 62 or other ignition means for igniting combustible fuel. This section includes an air inlet end portion 64 which receives atmospheric air from the engine room, and a combustion gas outlet portion 66.

The combustion gas outlet portion communicates through an arcuate coupling section 68 with a tailpipe section 70 which, in turn, communicates at its exhaust outlet end with a materials dehydration section 72.

In the preferred embodiment illustrated, the combustion chamber section is provided at its exhaust gas outlet end with a peripherial flange 74 arranged for removable connection to a corresponding flange 76 at the adjacent end of the arcuate coupling section 68, as by means of a plurality of bolts 78. The opposite end of the coupling section is fitted with an outer, forwardly projecting annular collar 80 dimensioned to freely receive therein the adjacent end of the tailpipe section 70.

The opposite end of the tailpipe section is, in similar manner, freely received within an enlarged collar 82 secured to and extending rearwardly of the rearward end of the dehydration section 72. The collars are interconnected by a turnbuckle assembly which includes an elongated threaded rod 84 received at its opposite ends in threaded nuts 86. Each nut is secured to a pair of laterally spaced lugs 88 which receive between them an ear 90 extending upwardly from the associated collar. Registering openings in the lugs and ears receive a pivot pin 92 for joining them together.

Thus, when it is desired to remove the tailpipe, as for replacement with another of equal or different length, the turnbuckle rod is rotated in the direction to move the collars apart sufficiently to release the tailpipe.

The dehydration section 72 preferably is in the form of a truncated cone. It is supported in a saddle member 94 which is secured to and extends through a mounting plate 96. The mounting plate is secured removably to a forward transverse wall 10' of the engine room, as by bolts 98. Said wall also is provided with an opening for passage of the saddle member.

As illustrated, the dehydration cone is mounted in the saddle by inserting it through the forward end of the saddle and coupling it to the tailpipe. The cone is supported in the saddle primarily at the forward end thereof, thereby allowing for movement of the pulse jet engine on its resilient mountings during operation.

The wet product inlet conduit 22 is connected to the dehydration cone 72 for introduction of the wet product into the cone in a direction substantially perpendicular to the directon of movement of the high velocity gases of combustion passing through the tailpipe and exiting the forward end of the dehydration cone.

It is an important feature of this invention that the point of introduction of the wet product into the dehydration section 72 be selected to maximize the dehydration process. This is accomplished empirically by moving the point of introduction along the length of the dehydration secton, for each type and moisture content of material to be dried, until there is achieved substantially complete and instantaneous dehydration of the product before it exits the forward end of the dehydration section.

Means preferably is provided to facilitate the adjustment of the position of the wet product inlet conduit 22 along the length of the dehydration section. In the embodiment illustrated, since the dehydraton section is in the form of a truncated cone, the inner, injection nozzle end of the wet product inlet conduit 22 is connected to an elongated nozzle plate 100 which overlies and covers a longitudinally elongated opening 102 in the dehydration cone. The plae is curved transversely to approximate the progressively changing diameter of the dehydration cone, to allow longitudinal adjustment of the position of the injection nozzle along the length of the elongated slot in the cone, while providing an adequate seal between the plate and cone.

The plate 100, and hence the position of the injection nozzle end of conduit 22, is secured in any desired position of adjustment by means of a pair of outer clamp bands 104 and 106 which encircle the dehydration cone and are secured together releasably by bolts 108 extended through aligned openings in the side flanges 110 of the clamp plates. The upper clamp band 104 is provided with a longitudinally elongated opening 112 for the reception of the injection nozzle end of conduit 22. Accordingly, the injection nozzle may be adjusted along the length of the dehydration cone by loosening the clamp bolts sufficently to relieve the clamping pressure of the upper clamp band on the injection nozzle plate 100 to allow the latter to be moved longitudinaly along the cone. The desired position of adjustment of the nozzle then is secured by tightening the clamp bolts, as wil be understood.

Combustible fuel, such as oil, gas, etc. is delivered to the combustion chamber 60 by one or more infeed lines, such as the two lines 114 illustrated, conencted to the fuel inlet conduit 20. An additional fuel inlet line 116 may be utilized to deliver combustible fuel to the downstream end of the arcuate coupler 68, to supply additional heat to the inlet end of the tailpipe, to increase the capacity of the system and to accommodate all types of fuels. This feature offers the same advantages for other users of all types of pulse jet engines.

The plate 96 supporting the dehydration cone saddle 94 also supports an augmenter which is positioned in axial alignment with the air inlet portion 64 of the combustion chamber and extends through the forward engine room wall 10′. It functions to communicate the high velocity combustion gases emitted as back pressure from the combustion chamber, into the collector room 24. These gases assist in the creation of gas flow in the downstream direction through the collector room and separator 38 to the gas outlet fan.

It is to be noted from Fig. 1 that operation of the air inlet fan 16 and the gas outlet fan 44 functions to create a pressure drop across the forward wall 10′ of the engine room, enhancing the performance of the pulse jet engine.

In the operation of the dehydrating apparatus described hereinbefore, the pulse jet engine is activated by delivery of combustible fuel to the combustion chamber where it is ignited by spark from the plug 62. A slurry, paste or particulate form of wet product is fed, generally under pressure, through the inlet conduit 22 from whence it enters the dehydration cone 72 in a direction substantially perpendicular to the direction of flow of high velocity combustion gases through the cone.

By adjusting the position of the injection nozzle along the length of the opening 102 in the dehydration cone, and analyzing the product emerging from the cone for moisture content, the position of the injection nozzle is established at which the material emerging from the dehydration cone is substantially completely dried. Considering the short distance from the injection nozzle to the outfeed end of the dehydration cone as being no more than about 30 to 45 centimeters, it is apparent that dehydration of the wet product occurs substantially instantaneously as it enters the cone from the injection nozzle.

Although the reason for this substantially instantanous and complete dehydration is not fully understood, the fact of its occurrence eliminates the requirement of additional heat and high velocity gas movement within the collector room, as required in prior dehydration apparatus of this type. It also reduces to a minimum the physical size and space requirement for the apparatus, as well as the amount of combustion fuel required for its performance. This correspondingly minimizes production time and cost. The dried product ejected from the forward end of the dehydration cone is carried by the high velocity gases of combustion into the collector room. The larger particles gravitate downward into the elongated housing 28 containing the conveyor screw 30 which, upon rotation, moves the collected particles to the dried product outlet 34 where they are collected or transported to other processing stations.

The fine particles carried with the high velocity combustion gases are drawn into the separator 38 which, by virtue of its characteristic operation, functions to separate the fine solids from the gas. The gas outlet fan 44 expels the clean gases of combustion into the atmosphere, or delivers them to other apparatus for further processing or use.

The apparatus described hereinbefore may be utilized to effect the dehydration of a wide variety of types of materials. For example, it may be used to dehydrate chicken, rabbit, goat and other animal manures for packaging and sale ad dried products. It may be used to remove contaminants from industrial sludges, such as detergent from wash waters before discharging the water to a river. It may also be utilized to recover valuable mateials, such as gold or other metals otherwise lost in the course of industrial processing.

If desired, an inlet 120 may be provided at any desired location downstream from the combustion chamber 60 for the introduction of previously dried particulate material which is desired to be calcined, or roasted to burn off undesirable components. The location of the inlet 120 will be governed by the degree of resistance of the material to calcining. For example, an easily calcined material may be introduced at the location of inlet 22, whereas a highly resistant material may require introduction at the location of inlet 120 in order to have longer residence time in the hot gases of combustion of the engine.

It will be apparent to those skilled in the art that various changes may be made in the size, shape, type, number and arrangement of parts described hereinbefore. For example, although the engine room is disclosed in the illustrated embodiment as containing a single pulse jet engine, it will be understood that a plurality of such engines may be utilized when the size of installation dictates. Although the inlet conduit 22 is illustrated as being connected to the dehydration cone for longitudinal adjustment relative thereto, it will be understood that for installations intended for the processing of a single material of relatively constant moisture content, the injection nozzle may be secured in permanent position at a point predetermined to achieve substantially instantaneous and complete dehydration of the product before it exits the dehydration cone.

## Claims

1. Dehydrating apparatus, comprising a pulse jet engine having a combustion chamber section (60) at one end of a dehydration section (72), which at the opposite end thereof, terminates in a discharge opening, a wet product delivery passageway (22) having a discharge end communicating with the dehydration section for delivering to said dehydration section wet product to be dehydrated and means (24) communicating with the discharge opening of the dehydration section for collecting the dehydrated product, characterized in that said dehydrating section, in the direction of the discharge opening, is of progressively expanding truncated conical configuration and said delivery passageway (22) is arranged to inject wet product into the dehydration section (72) in a direction substantially normal to the flow of combustion gases through said dehydration section, coupling means (100, 104, 106) being provided which interengage the dehydration section and the wet product delivery passageway for moving the discharge end of said delivery passageway along the length of the dehydration section, whereby to adjust the point of communication of said discharge end relative to the length of the dehydration section, to achieve substantially complete dehydration of wet product within the dehydration section.

2. Dehydrating apparatus according to claim 1, characterized in that it includes an engine room (10) for the pulse jet engine, air delivery means (18) communicating with the engine room, a gas outlet fan (44) communicating with a collector room (24) for exhausting combustion gases from the latter, the air delivery means and the gas outlet fan being operative to produce a pressure drop between the engine room (10) and the collector room (24).

3. Dehydrating apparatus according to claim 1 or 2 including separator means (38) communicating with the collector room (24) for separating finely dehydrated products from the combustion gases, characterized in that the gas outlet fan (44) communicates with the separator means (38) for exhausting combustion gases from the latter.

4. Dehydrating apparatus according to any one of claims 1—3, characterized by dehydrated product conveyor means (28, 30) in the bottom of the collector room (24) for removing the collected product therefrom.

5. Dehydrating apparatus according to any one of claims 1—4, characterized by means (116) for supplying additional combustible fuel to the engine intermediate the combustion chamber section (60) and dehydration section (72).

6. Dehydrating apparatus according to claim 5 wherein the engine has a tailpipe section (70) at the inlet end of the dehydration section (72) characterized in that said means (116) for supplying additional combustible fuel is connected to the inlet end of said tailpipe section (70).

7. Dehydrating apparatus according to any one of the preceding claims in which the pulse engine comprises an exhaust outlet, a tailpipe section and a coupler section, characterized in that said exhaust outlet is a section separate from the tailpipe section and the tailpipe section detachably interconnects the coupler section and the exhaust outlet section.

## Patentansprüche

1. Trocknungsvorrichtung, umfassend ein Verpuffungsstrahl-Triebwerk mit einem Verbrennungsraumabschnitt (60) am einen Ende eines Trockungsabschnitts (72), der an seinem gegenüberliegenden Ende mit einer Auslassöffnung endet, einem Feuchtprodukt-Zuführdurchgang (22) mit einem Ausstrossende, das mit dem Trockungsabschnitt verbunen ist, um zu trocknendes Feuchtprodukt dem Trocknungsabschnitt zuzuführen, und mit der Auslassöffnung des Trocknungsabschnitts verbundenen Mitteln (24) zum Dammeln des getrockneten Produkts, dadurch gekennzeichnet dass der Trocknungsabschnitt in Richtung der Auslassöffnung von sich allmählich erweiternder kegelstumpfförmiger Gesalt ist und der Zuführdurchgang (22) dazu ausgebildet ist, Feuchtprodukt in den Trocknungsabschnitt (72) in einer im wesentlichen normal zur Strömung des Verbrennungsgase durch den Trocknungsabschnitt liegenden Richtung einzuspritzen, wobei Kupplungsmittel (100, 104, 106) vorgesehen sind, die den Trocknungsabschnitt und den Feuchtprodukt-Zuführdurchgang miteinander wirkverbinden, um das Auslassende des Zuführdurchgangs die Länge des Trocknungsabschnitts entlang zu bewegen, wodurch die Anschlusstelle des Auslassendes in bezug auf die Länge des Trocknungsabschnitts eingestellt wird, um eine im wesentlichen vollständige Trocknung von Feuchtprodukt innerhalb des Trocknungsabschnitts zu erreichen.

2. Trocknungsvorrichtung nach Anspruch 1, dadurch gekennzeichnet, dass sie eine Triebwerkkammer (10) für das Verpuffungsstrahl-Triebwerk, mit der Triebwerkkammer verbundene Luftzufuhrmittel (18) und einen mit einer Sammelkammer (24) verbundenen Gasauslassventilator (44) zum Herausfördern von Verbrennungsgasen aus derselben umfasst, wobei die Luftzufuhrmittel und der Gasauslassventilator wirken, um zwischen der Triebwerkkammer (10) und der Sammelkammer (24) einen Druckabfall zu erzeugen.

3. Trocknungsvorrichtung nach Anspruch 1 oder 2, umfassend mit der Sammelkammer (24) verbundene Trennmittel (38) zum Abscheiden der getrockneten feinen Produkte von den Verbrennungsgasen, dadurch gekennzeichnet, dass der Gasauslassventilator (44) mit den Trennmitteln (38) verbunden ist, um Verbrennungsgase daraus herauszufördern.

4. Trocknungsvorrichtung nach einem der Ansprüche 1 bis 3, gekennzeichnet durch im Boden der Sammelkammer (24) angeordnete Fördermittel (28, 30) für getrocknetes Produkt zum Entfernen des gesammelten Produkts aus derselben.

5. Trocknungsvorrichtung nach einem der Ansprüche 1 is 4, gekennzeichnet durch Mittel (116) zum Zuführen von zusätzlichem Brennstoff zum Triebwerk zwischen dem Verbrennungsraumabschnitt (60) und dem Trocknungsabschnitt (72).

6. Trocknungsvorrichtung nach Anspruch 5, bei welcher das Triebwerk einen Auspuffabschnitt (70) am Einlassende des Trockungsabschnitts (72) aufweist, dadurch gekennzeichnet, dass die Mittel (116) zum Zuführen von zusätzlichem Brennstoff mit dem Einlassende des Auspuffabschnitts (70) verbunden sind.

7. Trocknungsvorrichtung nach einem der vorangehenden Ansprüche, bei welcher das Verpuffungsstrahl-Triebwerk einen Auspuffauslass, einen Auspuffabschnitt und einen Kupplungsabschnitt umfasst, dadurch gekennzeichnet, dass der Auspuffauslass ein vom Auspuffabschnitt separater Abschnitt ist und der Auspuffabschnitt den Kupplungsabschnitt und den Auspuffauslass-Abschnitt miteinander lösbar verbindet.

**Revendications**

1. Dispositif de déshydratation comportant un pulsoréacteur comprenant une section de chambre de combustion (60) à l'une des extrémités d'une section de déshydratation (72), laquelle en son extrémité opposée débouche sur une ouverture de décharge, un passage d'amenée (22) de produit humide comprenant une extrémité de décharge qui communique avec la section de déshydration pour amener du produit à déshydrater à cette section de déshydratation, et des moyens (24) qui communiquent avec l'ouverture de décharge de la section de déshydratation afin recueillir le produit déshydraté, caractérisé en ce qu'en direction de l'ouverture de décharge la section de déshydratation présente une configuration tronconique en expansion progressive et que le passage d'amenée (22) est disposé de manière à injecter du produit humide dans la section de déshydratation (72) dans une direction essentiellement normale au flux des gaz de combustion à travers la section de déshydratation, des moyens d'accouplement (100, 104, 106) étant prévus qui relient entre eux la section de déshydratation et le passage d'amenée de produit humide afin de déplacer l'extrémité de décharge du passage d'amenée le long de la section de déshydratation pour ajuster l'endroit où communique l'extrémité de décharge relativement à la longueur de la section de déshydratation et obtenir ainsi une déshydratation essentiellement complète du produit humide au sein de la section de dèshydratation.

2. Dispositif de déshydratation selon la revendication 1, caractérisé en ce qu'il comprend une chambre de réacteur (10) pour le pulsoréacteur, des moyens (18) d'amenée d'air qui communiquent avec la chambre de réacteur, un ventilateur (44) d'échappement de gaz qui communique avec une chambre de collection (24) pour en extraire les gaz de combustion, les moyens d'amenée d'air et le ventilateur d'échappement de gaz ayant pour action de produire une chute de pression entre la chambre de réacteur (10) et la chambre de collection (24).

3. Dispositif de déshydratation selon la revendication 1 ou 2 comportant des moyens séparateurs (38) qui communiquent avec la chambre de collection (24) afin de séparer les produits fin déshydratés des gaz de combustion, caractérisé en ce que le ventilateur (44) d'échappement de gaz communique avec les moyens séparateurs (38) pour en extraire les gaz de combustion.

4. Dispositif de déshydratation selon l'une quelconque des revendications 1 à 3, caractérisé par des moyens convoyeurs de produit déshydraté (28, 30) prévus dans le fond de la chambre de collection (24) pour en extraire le produit qui y est recueilli.

5. Dispositif de déshydratation selon l'une quelconque des revendications 1 à 4, caractérisé par des moyens (116) pour fournir du carburant additionnel au réacteur en un point situé entre la chambre de combustion (60) et la section de déshydratation (72).

6. Dispositif de déshydratation selon la revendication 5 dans lequel le réacteur comporte une section de tubulure d'échappement (70) située à l'extrémité d'admission de la section de déshydratation (72), caractérisé en ce que les moyens (116) pour fournir du carburant additionnel sont reliés à l'extrémité d'admission de la section de tubulure d'échappement (70).

7. Dispositif de déshydratation selon l'une quelconque des revendications précédentes, dans lequel le pulsoréacteur comporte une sortie d'échappement, une section de tubulure d'échappement et une section d'accouplement, caractérisé en ce que la sortie d'échappement est une section séparée de la section de tubulure d'échappement et que la section de tubulure d'échappement relie de façon détachable la section d'accouplement et la section de sortie d'échappement.

FIG.1

FIG.3

FIG.4

0 122 665

FIG.2